# EUROPEAN PATENT APPLICATION

(11) **EP 4 770 041 A1**
(43) Date of publication of application: **01.07.2026**
(21) Application number: 24870356.3
(22) Date of filing: 03.09.2024
(51) Int. Cl.: H04L 47/12

(54) **DATA TRANSMISSION METHOD AND COMMUNICATION APPARATUS**

(30) Priority: 25.09.2023 CN 202311245455
(71) Applicant: HUAWEI TECHNOLOGIES CO., LTD., Shenzhen, Guangdong 518129 (CN)
(72) Inventor: CAO, Youlong, Shenzhen, Guangdong 518129 (CN); QIN, Yi, Shenzhen, Guangdong 518129 (CN); WU, Kedi, Shenzhen, Guangdong 518129 (CN)
(74) Representative: Körber, Martin Hans
(86) International application number: PCT/CN2024/116580
(87) International publication number: WO 2025/066810

(57) **Abstract**

A data transmission method and a communication apparatus are provided. The method includes: receiving first information, where the first information indicates to delay delivering a first data packet to a first protocol layer, the first information is information at a second protocol layer, and the first protocol layer is an upper protocol layer of the second protocol layer; and delaying, based on the first information, delivering the first data packet to the first protocol layer for first duration. Therefore, data transmission efficiency can be improved, and network congestion can be relieved.

## Description

This application claims priority to Chinese Patent Application No. 202311245455.5, filed with the China National Intellectual Property Administration on September 25, 2023 and entitled "DATA TRANSMISSION METHOD AND COMMUNICATION APPARATUS", which is incorporated herein by reference in its entirety.

### TECHNICAL FIELD

This application relates to the communication field, and more specifically, to a data transmission method and a communication apparatus.

### BACKGROUND

With the rapid increase in communication transmission rates, a real-time video transmission service has gradually become one of core services in modem networks. With continuous progress and improvement of extended reality (extended reality, XR) technology, related industries are also booming. Virtual reality (virtual reality, VR) technology, as a type of XR, has entered various fields closely related to production and life.

With further development of extended reality and the tactile Internet, requirements for video transmission quality are increasingly high, and ensuring quality of experience (quality of experience, QoE) and quality of service (quality of service, QoS) has become a key focus of research.

### SUMMARY

Embodiments of this application provide a data transmission method and a communication apparatus, to improve data transmission efficiency and relieve network congestion.

According to a first aspect, a data transmission method is provided. The method may be performed by a terminal or a module (for example, a chip) configured in (or used in) a terminal. The following uses an example in which the method is performed by a terminal for description.

The method includes: The terminal receives first information, where the first information indicates to delay delivering a first data packet to a first protocol layer, the first information is information at a second protocol layer, and the first protocol layer is an upper protocol layer of the second protocol layer; and the terminal delays, based on the first information, delivering the first data packet to the first protocol layer for first duration.

According to the foregoing solution, a network device may notify, through information, the terminal to delay delivering a data packet to the first protocol layer, to implement transmission control over data packets on an access network side, and relieve network congestion caused when an application layer performs bit rate control without considering transmission status on the access network side. Therefore, data transmission efficiency can be improved, and network congestion can be relieved.

With reference to the first aspect, in some implementations of the first aspect, the first duration is predefined; or the first duration is configured through signaling; or the first duration is indicated in the first information.

According to the foregoing solution, the network device and the terminal may reach a consensus on the first duration for delaying delivering the first data packet in the foregoing manner, to improve accuracy of transmission control over data packets on the access network side.

In an implementation, the first information is carried in downlink control information DCI, and the first data packet is a transport block scheduled by the DCI.

In this implementation, the first protocol layer is a radio access control MAC layer, and the second protocol layer is a physical layer.

According to this implementation, the network device may specifically implement transmission control over data packets at the physical layer, to improve data transmission efficiency.

In another implementation, the first information is carried in a radio access control control element MAC CE, the first information includes an identifier of a logical channel, and the first data packet is carried on the logical channel.

In this implementation, the first protocol layer is a radio link control RLC layer, and the second protocol layer is a MAC layer.

According to this implementation, the network device may specifically implement transmission control over data packets at the MAC layer, to improve data transmission efficiency.

With reference to the first aspect, in some implementations of the first aspect, the MAC CE is used to retransmit the first information, and the initially transmitted first information fails to be received. That the terminal delays, based on the first information, delivering the first data packet to the first protocol layer for the first duration includes: The terminal delivers, based on the first information, a data packet carried on the logical channel to the first protocol layer at t+T, where t represents a moment at which a MAC CE used to initially transmit the first information is received, and T represents the first duration.

According to the foregoing solution, if the terminal fails to receive the initially transmitted first information sent by the network device to the terminal, but successfully receives the retransmitted first information, a start moment of the first duration for delaying delivering the first data packet may be defined as time t, that is, the reception time of the initially transmitted first information. This improves the accuracy of transmission control over data packets on the access network side.

According to a second aspect, a data transmission method is provided. The method may be performed by a network device or a module (for example, a chip) configured in (or used in) a network device, or may be implemented by a logical node, a logical module, or software that can implement all or some functions of a network device. The following uses a network device as an example.

It should be understood that, for beneficial effects of features corresponding to the first aspect in the second aspect, refer to related descriptions of the first aspect. Details are not described herein again.

The method includes: The network device generates first information, where the first information indicates to delay delivering a first data packet to a first protocol layer, the first information is information at a second protocol layer, and the first protocol layer is an upper protocol layer of the second protocol layer; and the network device sends the first information.

With reference to the second aspect, in some implementations of the second aspect, first duration is predefined; or first duration is configured through signaling; or first duration is indicated in the first information.

With reference to the second aspect, in some implementations of the second aspect, the first information is carried in downlink control information DCI, and the first data packet is a transport block scheduled by the DCI.

With reference to the second aspect, in some implementations of the second aspect, the first protocol layer is a radio access control MAC layer, and the second protocol layer is a physical layer.

With reference to the second aspect, in some implementations of the second aspect, the first information is carried in a radio access control control element MAC CE, the first information includes an identifier of a logical channel, and the first data packet is carried on the logical channel.

With reference to the second aspect, in some implementations of the second aspect, the first protocol layer is a radio link control RLC layer, and the second protocol layer is a MAC layer.

According to a third aspect, a data transmission method is provided. The method may be performed by a network device or a module (for example, a chip) configured in (or used in) a network device, or may be implemented by a logical node, a logical module, or software that can implement all or some functions of a network device. The following uses a network device as an example.

The method includes: The network device receives or sends a data packet in a data frame; and the network device delays sending downlink control information DCI for second duration when an amount of data received or sent in the data frame exceeds a data volume threshold, where the DCI is used to schedule remaining data packets in the data frame.

According to the foregoing solution, the network device may monitor transmission status of the data volume in the data frame, and when the amount of data that has been transmitted in the data frame exceeds the data volume threshold, the network device delays sending the DCI used to schedule the remaining data packets in the data frame. A transmission delay of the data packets in the data frame is increased, thereby relieving network congestion caused when an application layer performs bit rate control without considering transmission status on an access network side. Therefore, data transmission efficiency can be improved, and network congestion can be relieved.

With reference to the third aspect, in some implementations of the third aspect, the second duration is predefined; or the second duration is configured through signaling.

According to a fourth aspect, a data transmission method is provided. The method may be performed by a terminal or a module (for example, a chip) configured in (or used in) a terminal. The following uses an example in which the method is performed by a terminal for description.

The method includes: The terminal receives second information, where the second information indicates to delay sending a scheduling request SR; and the terminal delays, based on the second information, sending the SR for third duration.

According to the foregoing solution, when the network device temporarily does not schedule the terminal for uplink data transmission, the network device may notify the terminal to delay sending the SR to the network device. Therefore, unnecessary air interface resource overheads can be reduced, and power consumption of the terminal can be reduced.

With reference to the fourth aspect, in some implementations of the fourth aspect, the method further includes: The terminal sends a portion of data packets in a data frame, where the SR requests to schedule remaining data packets in the data frame.

According to the foregoing solution, when an amount of data received from the terminal in the data frame by the network device meets a data volume threshold, the network device delays sending, to the terminal, scheduling information used to schedule the remaining data packets in the data frame, and the network device may send the second information to the terminal, and notify, through the second information, the terminal to delay sending the SR that requests to schedule the remaining data packets in the data, thereby avoiding unnecessary air interface resource overheads and power consumption of the terminal that are caused when the terminal continues to send the SR to the network device.

With reference to the fourth aspect, in some implementations of the fourth aspect, the third duration is predefined; or the third duration is configured through signaling; or the third duration is indicated in the second information.

According to the foregoing solution, the network device and the terminal may reach a consensus on the third duration for delaying sending the SR in the foregoing manner, to improve accuracy of air interface resource scheduling on the access network side.

With reference to the fourth aspect, in some implementations of the fourth aspect, the second information is carried in downlink control information DCI or a radio access control control element MAC CE.

According to a fifth aspect, a data transmission method is provided. The method may be performed by a network device or a module (for example, a chip) configured in (or used in) a network device, or may be implemented by a logical node, a logical module, or software that can implement all or some functions of a network device. The following uses a network device as an example.

It should be understood that, for beneficial effects of features corresponding to the fourth aspect in the fifth aspect, refer to related descriptions of the fourth aspect. Details are not described herein again.

The method includes: The network device generates second information, where the second information indicates to delay sending a scheduling request SR; and the network device sends the second information.

With reference to the fifth aspect, in some implementations of the fifth aspect, the method further includes: The network device receives a portion of data packets in a data frame. The sending the second information includes: The network device sends the second information when an amount of data received in the data frame exceeds a data volume threshold, where the SR requests to schedule remaining data packets in the data frame.

With reference to the fifth aspect, in some implementations of the fifth aspect, the second information is carried in downlink control information DCI or a radio access control control element MAC CE.

According to a sixth aspect, a communication apparatus is provided. In a design, the apparatus may include a module in one-to-one correspondence with the method/operation/step/action described in the first aspect or any implementation of the first aspect. The module may be implemented by a hardware circuit, software, or a combination of a hardware circuit and software. In a design, the apparatus includes a processing unit and an interface unit. The interface unit is configured to receive first information, where the first information indicates to delay delivering a first data packet to a first protocol layer, the first information is information at a second protocol layer, and the first protocol layer is an upper protocol layer of the second protocol layer. The processing unit is configured to delay, based on the first information, delivering the first data packet to the first protocol layer for first duration.

According to a seventh aspect, a communication apparatus is provided. In a design, the apparatus may include a module in one-to-one correspondence with the method/operation/step/action described in the second aspect or any implementation of the second aspect. The module may be implemented by a hardware circuit, software, or a combination of a hardware circuit and software. In a design, the apparatus includes a processing unit and an interface unit. The processing unit is configured to generate first information, where the first information indicates to delay delivering a first data packet to a first protocol layer, the first information is information at a second protocol layer, and the first protocol layer is an upper protocol layer of the second protocol layer. The interface unit is configured to send the first information.

According to an eighth aspect, a communication apparatus is provided. In a design, the apparatus may include a module in one-to-one correspondence with the method/operation/step/action described in the third aspect or any implementation of the third aspect. The module may be implemented by a hardware circuit, software, or a combination of a hardware circuit and software. In a design, the apparatus includes a processing unit and an interface unit. The interface unit is configured to receive or send a data packet in a data frame. The processing unit is configured to determine to delay sending downlink control information DCI for second duration when an amount of data received or sent in the data frame exceeds a data volume threshold, where the DCI is used to schedule remaining data packets in the data frame.

According to a ninth aspect, a communication apparatus is provided. In a design, the apparatus may include a module in one-to-one correspondence with the method/operation/step/action described in the fourth aspect or any implementation of the fourth aspect. The module may be implemented by a hardware circuit, software, or a combination of a hardware circuit and software. In a design, the apparatus includes a processing unit and an interface unit. The interface unit is configured to receive second information, where the second information indicates to delay sending a scheduling request SR. The processing unit is configured to determine, based on the second information, to delay sending the SR for third duration.

According to a tenth aspect, a communication apparatus is provided. In a design, the apparatus may include a module in one-to-one correspondence with the method/operation/step/action described in the fifth aspect or any implementation of the fifth aspect. The module may be implemented by a hardware circuit, software, or a combination of a hardware circuit and software. In a design, the apparatus includes a processing unit and an interface unit. The processing unit is configured to generate second information, where the second information indicates to delay sending a scheduling request SR. The interface unit is configured to send the second information.

According to an eleventh aspect, a communication apparatus is provided, including a processor. The processor may implement the method according to any one of the first aspect to the fifth aspect and the possible implementations of the first aspect to the fifth aspect. Optionally, the communication apparatus further includes a memory. The processor is coupled to the memory, and may be configured to execute instructions in the memory, to implement the method according to any one of the first aspect to the fifth aspect and the possible implementations of the first aspect or the fifth aspect. Optionally, the communication apparatus further includes a communication interface, and the processor is coupled to the communication interface. In this embodiment of this application, the communication interface may include, but is not limited to, a transceiver, a pin, a circuit, a bus, a module, or another type of communication interface.

In an implementation, the communication apparatus is a communication device (for example, a terminal device or a network device). When the communication apparatus is a communication device, the communication interface may be a transceiver or an input/output interface.

In another implementation, the communication apparatus is a chip configured in a communication device. When the communication apparatus is a chip configured in a communication device, the communication interface may be an input/output interface.

Optionally, the transceiver may be a transceiver circuit. Optionally, the input/output interface may be an input/output circuit.

According to a twelfth aspect, a computer program product is provided. The computer program product includes a computer program (which may also be referred to as code or instructions). When the computer program is run, a computer is caused to perform the method according to any one of the first aspect to the fifth aspect and the possible implementations of the first aspect to the fifth aspect.

According to a thirteenth aspect, a computer-readable storage medium is provided. The computer-readable storage medium stores a computer program (which may also be referred to as code or instructions). When the computer program is run on a computer, the computer is caused to perform the method according to any one of the first aspect to the fifth aspect and the possible implementations of the first aspect to the fifth aspect.

According to a fourteenth aspect, a communication system is provided, including the foregoing at least one network device and the foregoing at least one terminal device.

It should be understood that, for beneficial effects of features corresponding to the first aspect, the third aspect, and the fourth aspect in the sixth aspect to the fourteenth aspect, refer to related descriptions of the first aspect, the third aspect, and the fourth aspect. Details are not described herein again.

### BRIEF DESCRIPTION OF DRAWINGS

FIG. 1 is a diagram of an architecture of a communication system according to an embodiment of this application;
FIG. 2 is a diagram of a structure of an access network protocol layer according to an embodiment of this application;
FIG. 3 is a schematic flowchart of a data transmission method according to an embodiment of this application;
FIG. 4 is a diagram of first information in a MAC CE according to an embodiment of this application;
FIG. 5 is a diagram of a start moment of first duration according to an embodiment of this application;
FIG. 6 and FIG. 7 are different schematic flowcharts of a data transmission method according to embodiments of this application;
FIG. 8 is a block diagram of an example of a communication apparatus according to an embodiment of this application; and
FIG. 9 is a diagram of a structure of another example of a communication apparatus according to an embodiment of this application.

### DESCRIPTION OF EMBODIMENTS

The following describes technical solutions of this application with reference to accompanying drawings.

In embodiments of this application, "/" may represent an "or" relationship between associated objects. For example, A/B may represent A or B. "And/or" may be used to describe three relationships between the associated objects. For example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" do not limit a quantity and an execution sequence, and the terms such as "first" and "second" do not limit a definite difference. In embodiments of this application, terms such as "example" or "for example" are used to represent giving an example, an illustration, or a description. Any embodiment or design scheme described with "example" or "for example" should not be explained as being more preferred or having more advantages than another embodiment or design scheme. The terms such as "example" or "for example" are used to present a related concept in a specific manner for ease of understanding. In embodiments of this application, "at least one (type)" may alternatively be described as "one (type) or a plurality of (types)", and "a plurality of (types)" may be two (types), three (types), four (types), or more (types). This is not limited in this application.

The technical solutions in embodiments of this application may be applied to various communication systems, for example, a long term evolution (long term evolution, LTE) system, a 5th generation (5th generation, 5G) communication system, and a wireless fidelity (wireless fidelity, Wi-Fi) system. In addition, a communication method provided in this application may be further applied to a communication system evolved after 5G, for example, a 6th generation (6th generation, 6G) communication system, a future communication system, or another communication system. This is not limited in this application.

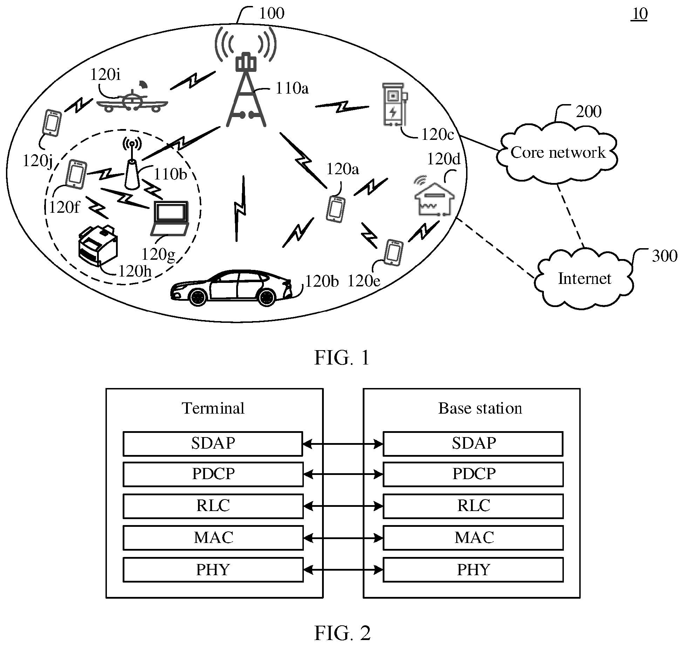

FIG. 1 is a diagram of a possible and non-limiting system. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be separate physical devices, or may be a single physical device that integrates logical functions of the core network and the radio access network.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). Alternatively, the RAN 100 may be an open access network (open RAN, O-RAN or ORAN), a cloud radio access network (cloud radio access network, CRAN), or a wireless fidelity (wireless fidelity, Wi-Fi) system. The RAN 100 may also be a communication system that integrates two or more of the foregoing systems.

The RAN node 110 may also be sometimes referred to as an access network device, a RAN entity, an access node, or the like, and forms part of the communication system, to help the terminal implement radio access. A plurality of RAN nodes 110 in the communication system 10 may be nodes of a single type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, the RAN node 110 and the terminal 120 are both referred to as communication apparatuses. For example, the network elements 110a and 110b in FIG. 1 may be understood as communication apparatuses possessing functions of a base station, and the network elements 120a to 120j may be understood as communication apparatuses possessing functions of a terminal.

In a possible scenario, the RAN node may be a base station (base station). For example, the RAN node may be an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may be implemented through a software function running on hardware, or may be implemented through an instantiated virtualization function on a platform (for example, a cloud platform). Alternatively, the RAN node in this application may be a logical node, a logical module, or software that can implement all or some functions of the access network device.

In another possible scenario, a plurality of RAN nodes coordinate to assist a terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be integrated into a network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented through a software module, a hardware module, or a combination of a software module and a hardware module.

The terminal may also be referred to as a terminal device, user equipment (user equipment, UE), a mobile station, a mobile terminal, or the like. The terminal may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), D2D, V2X, machine-type communication (machine-type communication, MTC), internet of things (internet of things, IoT), virtual reality, augmented reality, industrial control, autonomous driving, remote medical, smart grid, smart furniture, smart office, smart wearable, smart transportation, sensing terminal, terminal with integrated communication and sensing, or smart city. The terminal may be a mobile phone (for example, 120a, 120j, and 120e in FIG. 1), a tablet computer, a computer with a wireless transceiver function (for example, 120g in FIG. 1), customer-premises equipment (customer-premises equipment, CPE), a smart point of sale (point of sale, POS) machine, a wearable device, a vehicle (for example, 120b in FIG. 1), an uncrewed aerial vehicle, a helicopter, an airplane (for example, 120i in FIG. 1), a ship, a robot, a robotic arm, a sensor, a perceptron, a smart home device (for example, 120h in FIG. 1), or the like.

Communication between the base station and the terminal complies with a specific protocol layer structure. As shown in FIG. 2, the protocol layer structure may include a packet data convergence protocol (packet data convergence protocol, PDCP) layer, a radio link control (radio link control, RLC) layer, a media access control (media access control, MAC) layer, or a physical (physical, PHY) layer. In a possible implementation, a service data adaptation protocol (service data adaptation protocol, SDAP) layer may be included above the PDCP layer. The SDAP layer is responsible for QoS flow mapping. The PDCP layer is responsible for header compression, encryption, decryption, in-order delivery, and the like. The RLC layer is responsible for segmentation and reassembly, automatic repeat request (automatic repeat request, ARQ), and the like. The MAC layer is responsible for transport channel mapping. The PHY layer is responsible for modulation, demodulation, encoding/decoding, precoding, and the like.

In some deployments, the base station may include a plurality of access network nodes, and the plurality of access network nodes may include a CU and a DU. The CU may implement some protocol layer functions of the base station, and the DU may implement some protocol layer functions of the base station. For example, the CU may implement functions of an RRC layer, the SDAP layer, and the PDCP layer. The DU is responsible for processing a physical layer protocol and a real-time service; for example, it may implement functions of the RLC layer, the MAC layer, and the PHY layer. The CU may further include a CU-CP and a CU-UP. The CU-CP may be responsible for a control plane function, for example, implementing an RRC layer and a PDCP layer control plane (PDCP-C) function. The CU-UP may be responsible for a user plane function, for example, implementing the SDAP layer and a PDCP layer user plane (PDCP-U) function. However, this application is not limited thereto.

In this application, the MAC layer may be referred to as an upper protocol layer of the PHY layer; the RLC layer may be referred to as an upper protocol layer of the MAC layer; the PDCP layer may be referred to as an upper protocol layer of the RLC layer; and the SDAP layer may be referred to as an upper protocol layer of the PDCP layer.

Data is correspondingly encapsulated or decapsulated at each protocol layer. At a transmit side of the data, data is encapsulated at each protocol layer. Data received by a protocol layer from an upper protocol layer of the protocol layer is referred to as a service data unit (service data unit, SDU) of the protocol layer, and becomes a protocol data unit (protocol data unit, PDU) of the protocol layer after being encapsulated at the protocol layer. For example, the protocol layer adds control information at the protocol layer to the obtained SDU to obtain the PDU, and transfers the PDU to a lower protocol layer as an SDU of the lower protocol layer. At a receive side of the data, the data is decapsulated at each protocol layer. A protocol layer receives a PDU from an upper protocol layer of the protocol layer, and after being decapsulated at the protocol layer, the PDU is referred to as an SDU of the protocol layer. For example, the protocol layer parses control information of the current protocol layer encapsulated in the PDU to obtain the SDU, and transfers the SDU to the upper protocol layer as a PDU of the upper protocol layer.

For example, data received by the PDCP layer at the transmit side from an upper layer is referred to as a PDCP SDU. The PDCP layer encapsulates the PDCP SDU to obtain a PDCP PDU, and the PDCP layer transfers the PDCP PDU to the RLC layer. The PDCP PDU received by the RLC layer from the PDCP layer is an RLC SDU. The RLC layer encapsulates the RLC SDU to obtain an RLC PDU, and transfers the RLC PDU to the MAC layer. The RLC PDU received by the MAC layer from the RLC layer is a MAC SDU. The MAC layer encapsulates the MAC SDU to obtain a MAC PDU, and the MAC PDU may also be referred to as a transport block (transport block, TB). The MAC layer transfers the TB to the PHY layer, and the PHY layer processes the TB and sends the TB over a radio channel. At the receive side, data received from the radio channel is processed by the PHY layer to obtain the TB. The PHY layer transfers the TB to the MAC layer, and each protocol layer at the receive side decapsulates an obtained PDU and delivers the decapsulated PDU to an upper protocol layer.

In this application, at the transmit side of the data, information at a protocol layer may be understood as information added when the protocol layer encapsulates an SDU of the protocol layer; and at the receive side of the data, information at a protocol layer may be understood as information obtained by the protocol layer by decapsulating a PDU of the protocol layer.

A specific technology and a specific device form that are used by the terminal are not limited in this application. It should be understood that in this application, "sending information/data to... (for example, the terminal)" may be understood as that a destination of the information is the terminal, and may include directly or indirectly sending the information/data to the terminal. "Receiving information/data from... (for example, the terminal)" may be understood as that a source of the information is the terminal, and may include directly or indirectly receiving the information/data from the terminal. The information/data may undergo necessary processing, for example, a format change, between the source and the destination for information/data sending. However, the destination may understand valid information/data from the source. A similar expression in this application may be understood similarly, and details are not described herein again.

In this application, "sending information/data" indicates only a transferring direction of the information/data, includes direct sending through an air interface and indirect sending by a processing unit through an air interface. "Sending" may also be understood as "output" of a module interface. "Receiving information/data" indicates only a transferring direction of the information/data, includes direct receiving through an air interface and indirect receiving by a processing unit through an air interface. "Receiving" may also be understood as "input" of a module interface.

It may be understood that, in this application, an example in which the network device and the terminal are used as execution bodies for illustrating interaction is used for illustration. However, the execution bodies for illustrating the interaction are not limited in this application. The network device may be the RAN node described above, or the network device includes one or more RAN nodes described above. Functions/steps implemented by the network device in the method of this application may alternatively be implemented by a module (for example, a chip, a chip system, or a processor) used in the network device, or may be implemented by a logical node, a logical module, or software that can implement all or some of the functions of the network device. Functions/steps implemented by the terminal in the method of this application may alternatively be implemented by a module (for example, a chip, a chip system, or a processor) used in the terminal, or may be implemented by a logical node, a logical module, or software that can implement all or some of functions of the terminal.

For transmission of a video frame, currently, a widely used manner is to divide a video frame into a plurality of internet protocol (internet protocol, IP) packets at a network transmission layer for transmission. Transmission of the IP packets of the video frame may be performed between a cloud server and the terminal through a core network and an access network. To ensure a transmission rate of the video frame and relieve network congestion, a bit rate control technology is provided. An application server may adaptively adjust a bit rate of source coding based on transmission status of data packets. Specifically, the application server may dynamically adjust the bit rate based on a packet loss rate and a delay status of the data packets. However, in this manner, the application server adjusts the bit rate only based on the packet loss rate and the delay status of video service data of the application server, and on an access network side, data of a plurality of services of different application servers is aggregated and transmitted through an air interface. When a network is normal, each application server determines that the packet loss rate and a delay are small, and increases the bit rate through the bit rate control technology. As a result, an amount of data to be transmitted through the air interface greatly increases, causing network congestion. That is, currently, because transmission status of an air interface segment of the access network is not considered during transmission rate control of video frames, transmission efficiency of the video frames is affected. This application proposes to perform transmission policy control on an air interface side, to relieve network congestion and improve data transmission efficiency.

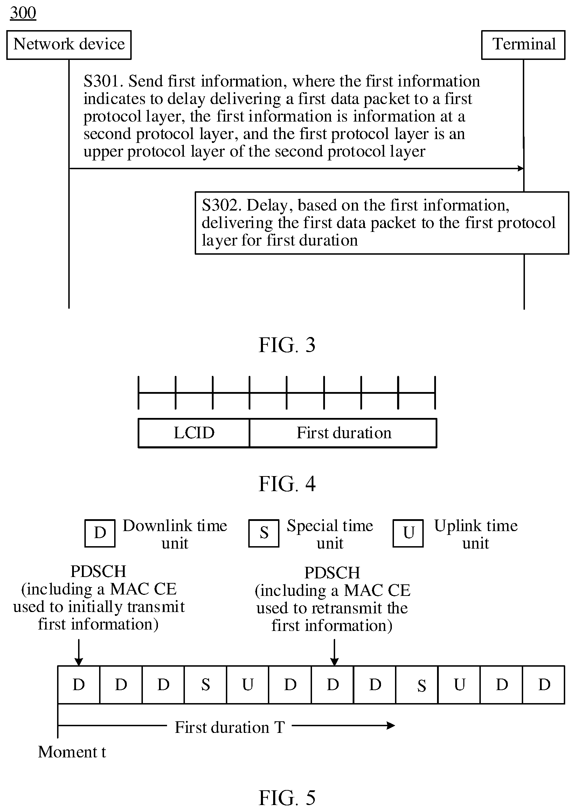

FIG. 3 is a schematic flowchart of a data transmission method 300 according to an embodiment of this application. The method 300 includes but is not limited to the following S301 and S203.

S301. A network device sends first information to a terminal, where the first information indicates to delay delivering a first data packet to a first protocol layer, the first information is information at a second protocol layer, and the first protocol layer is an upper protocol layer of the second protocol layer.

Correspondingly, the terminal receives the first information from the network device, and determines, based on the first information, to delay delivering the first data packet to the first protocol layer.

For example, the network device may determine, based on current air interface load, whether the network device can accept an increase in a bit rate of source coding by an application layer. If the network device cannot accept the increase, the network device notifies the terminal to delay delivering the first data packet to the first protocol layer. Alternatively, the network device may report an air interface status, for example, a load status, to a core network node. The network device may receive an indication from the core network node, to notify the terminal to delay delivering the first data packet to the first protocol layer. A transmission delay of a data packet can be increased through a control policy on an access network side, so that data transmission congestion on the access network side caused by an increase in a bit rate at an application layer can be relieved.

S302. The terminal delays, based on the first information, delivering the first data packet to the first protocol layer for first duration.

The terminal may determine to delay delivering the first data packet to the first protocol layer for the first duration. The first duration may be predefined. For example, after receiving the first information, the terminal may determine, based on the predefined first duration, to specifically delay delivering the first data packet to the first protocol layer for the first duration. Alternatively, the first duration may be configured through signaling. For example, before sending the first information to the terminal, the network device may configure the first duration for the terminal through signaling. After receiving the first information, the terminal determines the first duration and delays delivering the first data packet to the first protocol layer for that duration. For example, the signaling may be a radio resource control (radio resource control, RRC) message, a MAC control element (control element, CE), or downlink control information (downlink control information, DCI). Alternatively, the first duration may be indicated in the first information. The terminal may determine, based on the first information, to delay delivering the first data packet to the first protocol layer, and specific delay duration is the first duration.

In an implementation, the first information is carried in DCI, and the first data packet is a TB scheduled by the DCI.

In this implementation, the first protocol layer is a MAC layer, and the second protocol layer is a PHY layer.

The first information is information at the PHY layer, that is, information parsed or processed by the PHY layer. The terminal determines, based on the first information in the DCI that is obtained by the PHY layer through parsing, that the PHY layer delays delivering, to the MAC layer, the TB scheduled by the DCI.

Optionally, the first duration is indicated in the first information. For example, the first information may include the first duration, or the first information may include an identifier of the first duration.

For example, the network device may preconfigure a correspondence between a plurality of pieces of duration and a plurality of identifiers for the terminal through signaling (for example, through an RRC message or a MAC CE), or may predefine a correspondence between a plurality of pieces of duration and a plurality of identifiers. The first information includes the identifier of the first duration, and the terminal may determine the first duration based on the identifier of the first duration and the correspondence.

For example, it may be specified that the PHY layer of the terminal may deliver the first data packet to the MAC layer after the first duration following correctly decoding of the first data packet. Alternatively, the PHY layer of the terminal may transfer the first data packet to the MAC layer after the first duration of a resource carrying the first data packet. Alternatively, the PHY layer of the terminal may transfer the first data packet to the MAC layer after the first duration following correctly decoding of the first information. Alternatively, the PHY layer of the terminal may transfer the first data packet to the MAC layer after the first duration of a resource carrying the first information.

In another implementation, the first information is carried in a MAC CE, the first information further includes an identifier (identifier, ID) of a logical channel, and the first data packet is carried on the logical channel (logic channel, LC).

In this implementation, the first protocol layer is an RLC layer, and the second protocol layer is a MAC layer.

The first information is information at the MAC layer, that is, information parsed or processed by the MAC layer, for example, information obtained by decapsulating a TB obtained by the MAC layer from the PHY layer. The MAC layer determines, based on the first information, that the MAC layer delays delivering the first data packet, that is, a data packet on the logical channel indicated by the first information, to the RLC layer.

Optionally, the first duration may be indicated in the first information. For example, the first information may include the first duration, or the first information may include an identifier of the first duration. For example, the first information in the MAC CE may be a byte shown in FIG. 4, including a 3-bit logical channel identifier LCID and 5-bit first duration.

In this implementation, that the terminal delays, based on the first information, delivering the first data packet to the first protocol layer for the first duration includes: The terminal delivers, based on the first information, the data packet carried on the logical channel indicated by the first information to the first protocol layer at t+T, where t represents a moment at which a MAC CE used to initially transmit the first information is received, and T represents the first duration.

For example, if the terminal correctly receives the MAC CE used to initially transmit the first information, and a moment at which the terminal receives the MAC CE is the moment t, the terminal may determine to deliver the first data packet to the RLC layer following the first duration T after the moment t.

For another example, as shown in FIG. 5, D represents a downlink (downlink, D) time unit, S represents a special (special, S) time unit, where the special time unit may be used for uplink/downlink switching or may be referred to as a switching time unit, and U represents an uplink (uplink, U) time unit. The terminal receives, at the moment t, the MAC CE used to initially transmit the first information, but does not correctly receive (for example, not correctly decode) the MAC CE. The MAC CE may be carried on a physical downlink shared channel (physical downlink shared channel, PDSCH). Specifically, the PDSCH carries a TB, and the TB includes the MAC CE. If the terminal does not correctly receive the TB, the network device may retransmit the TB to the terminal. The terminal may receive the TB retransmitted by the network device. If the terminal correctly receives the TB retransmitted by the network device, the terminal may obtain the first information. The terminal may determine, based on the first information, to delay delivering the first data packet to the RLC layer for the first duration, where a start moment of the first duration is the moment t of the MAC CE used to initially transmit the first information. The terminal delivers the first data packet to the RLC layer following the first duration T after the moment t. Specifically, the first data packet is a data packet that is carried on the logical channel indicated by the first information and that is received after the moment t.

According to the foregoing solution, the network device may notify, through information, the terminal to delay delivering a data packet to the first protocol layer, to implement transmission control over data packets on an access network side, and relieve network congestion caused when an application layer performs bit rate control without considering transmission status on the access network side. Therefore, data transmission efficiency can be improved, and network congestion can be relieved.

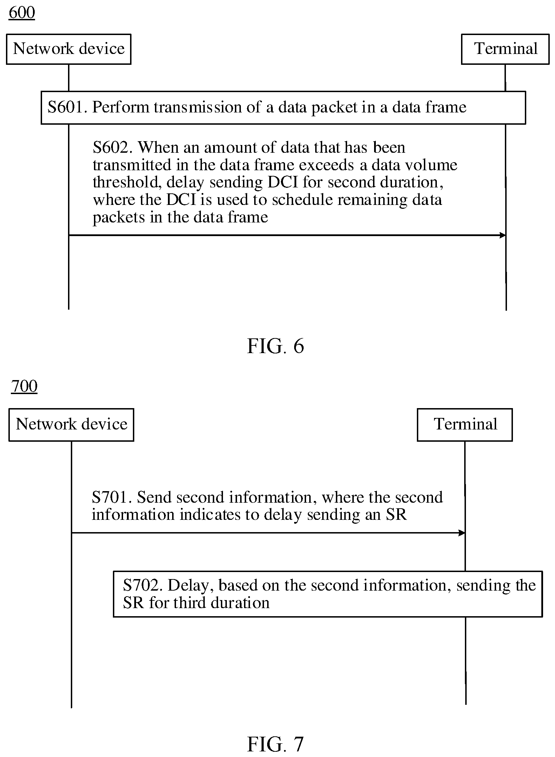

FIG. 6 is a schematic flowchart of a data transmission method 600 according to an embodiment of this application. The method 600 includes but is not limited to the following S601 and S602.

S601. A network device and a terminal perform transmission of a data packet in a data frame.

That the network device and the terminal perform transmission of the data packet in the data frame includes: The network device receives (or sends) the data packet in the data frame, and correspondingly, the terminal sends (or receives) the data packet in the data frame.

In an example, the data frame may be a downlink data frame, and the network device may send the data packet in the data frame to the terminal. Correspondingly, the terminal receives the data packet in the data frame from the network device.

In another example, the data frame may be an uplink data frame, and the terminal may send the data packet in the data frame to the network device. Correspondingly, the network device receives the data packet in the data frame from the terminal.

S602. When an amount of data that has been transmitted in the data frame exceeds a data volume threshold, the network device delays sending DCI for second duration, where the DCI is used to schedule remaining data packets in the data frame.

For example, the data frame may be a downlink data frame, and a core network node may mark a plurality of data packets included in a data frame as a PDU set. The network device may identify, based on a related mark of the core network node, the data packets included in the data frame. The network device may monitor an amount of data sent to the terminal in the data frame. When the amount of data that has been sent in the data frame exceeds the data volume threshold, the network device determines to delay sending the DCI for scheduling the remaining data packets in the data frame to the terminal for the second duration, to delay sending the remaining data packets in the data frame to the terminal, so that a transmission delay of the data packets in the data frame is increased, thereby relieving network congestion caused when an application layer performs bit rate control without considering transmission status on an access network side. Therefore, data transmission efficiency can be improved, and network congestion can be relieved.

For another example, the data frame may be an uplink data frame, and the network device may determine, based on a buffer status report (buffer status report, BSR) from the terminal, the amount of data included in the data frame. The network device receives a data packet in the data frame from the terminal, detects an amount of data that has been received in the data frame, and when the amount exceeds the data volume threshold, delays sending the DCI for scheduling the remaining data packets in the data frame to the terminal for the second duration. In this way, the terminal may delay sending the remaining data packets in the data frame to the network device, so that a transmission delay of the data packets in the data frame is increased, thereby relieving network congestion caused when an application layer performs bit rate control without considering transmission status on an access network side. Therefore, data transmission efficiency can be improved, and network congestion can be relieved.

The network device delays sending the DCI to the terminal for the second duration, where the data packet scheduled by the DCI may be a portion of or all of the remaining data packets in the data frame. For example, the DCI schedules a portion of the remaining data packets in the data frame, and the network device may further schedule another data packet in the remaining data packets through another DCI. Alternatively, the DCI may schedule all of the remaining data packets in the data frame. This is not limited in this application, and may be implemented based on a specific situation.

The second duration for which the network device delays sending the DCI may be preconfigured, or may be determined by the network device based on a specific implementation requirement. Alternatively, the second duration may be configured through signaling. For example, the core network node may configure the second duration for the network device through signaling. This is not limited in this application.

The network device monitors the amount of data that has been transmitted in the data frame, and when the amount exceeds the data volume threshold, the network device determines to delay scheduling the remaining data packets in the data frame. In an optional implementation, the network device may delay scheduling the remaining data packets in the data frame when the amount exceeds or reaches the data volume threshold. That is, regardless of whether the amount exceeds the data volume threshold or the amount reaches the data volume threshold, the network device delays scheduling the remaining data packets in the data frame.

For example, the data volume threshold may be 10%. If the network device determines that the amount of data that has been transmitted in the data frame is greater than 10% of the data volume in the data frame, the network device delays scheduling the data packets in the data frame. Alternatively, regardless of whether the amount of data that has been transmitted in the data frame is greater than 10% of a total data volume in the data frame or is equal to 10% of a total data volume, the network device delays scheduling the remaining data packets in the data frame.

According to the foregoing solution, the network device may monitor transmission status of the data volume in the data frame, and when the amount of data that has been transmitted in the data frame exceeds the data volume threshold, the network device delays sending the DCI used to schedule the remaining data packets in the data frame. A transmission delay of the data packets in the data frame is increased, thereby relieving network congestion caused when an application layer performs bit rate control without considering transmission status on an access network side. Therefore, data transmission efficiency can be improved, and network congestion can be relieved.

In mobile communication, when data is present in a buffer, the terminal sends a scheduling request (scheduling request, SR) to the network device to request scheduling for uplink data transmission. However, the network device may temporarily not schedule the terminal for uplink data transmission due to insufficient air interface resources, excessive loads, or high power consumption of the terminal, and the network device may temporarily not send uplink scheduling DCI to the terminal. However, the terminal may continue to send the SR to the network device because data is present in the buffer, causing unnecessary air interface resource overheads and power consumption of the terminal. Therefore, in embodiments of this application, when the network device temporarily does not schedule the terminal for uplink data transmission, the network device may notify the terminal to delay sending the SR to the network device. The following describes in detail a data transmission method 700 according to an embodiment of this application with reference to FIG. 7. The method 700 includes but is not limited to S701 and S702.

S701. A network device sends second information to a terminal, where the second information indicates the terminal to delay sending an SR.

The SR requests the network device to schedule the terminal for uplink data transmission. For example, the second information may be carried in DCI. Alternatively, the second information may be carried in a MAC CE.

S702. The terminal determines, based on the second information, to delay sending the SR to the network device for third duration.

The terminal receives the second information from the network device, and determines, based on the second information, to delay sending the SR to the network device. Specifically, the terminal may delay sending the SR to the network device for the third duration. The third duration may be predefined, or the third duration may be configured for the terminal through signaling before the network device sends the second information to the terminal, or the third duration may be indicated in the second information. For example, the second information includes the third duration or an identifier of the third duration.

For example, it may be specifically specified that the terminal sends the SR to the network device after the third duration following correctly decoding of the second information. Alternatively, the terminal may send the SR to the network device after the third duration of a resource carrying the second information. Alternatively, after generating the third duration for the SR, the terminal may send the SR to the network device. The terminal delays, according to a rule, sending the SR to the network device for the third duration.

According to the foregoing solution, when the network device temporarily does not schedule the terminal for uplink data transmission, the network device may notify the terminal to delay sending the SR to the network device. Therefore, unnecessary air interface resource overheads can be reduced, and power consumption of the terminal can be reduced.

The embodiment shown in FIG. 7 may be implemented in combination with the embodiment shown in FIG. 6. For example, the terminal sends a data packet in the data frame to the network device. Correspondingly, the network device receives the data packet from the terminal in the data frame. The network device monitors an amount of data that has been received in the data frame, and when the amount of data that has been received in the data frame exceeds the data volume threshold, the network device determines to delay sending the DCI to the terminal for the second duration, and the network device sends the second information to the terminal, where the second information indicates the terminal to delay sending the SR, and the SR requests to schedule the remaining data packets in the data frame. The terminal determines, based on the second information, to delay sending the SR for scheduling the remaining data packets in the data frame for the third duration, thereby avoiding unnecessary air interface resource overheads and power consumption of the terminal that are caused when the terminal continues to send the SR to the network device.

The terminal delays sending the SR to the network device for the third duration. The SR requests to schedule a portion or all of the remaining data packets in the data frame. For example, the SR may request to schedule a portion of the remaining data packets in the data frame, and the terminal may further request to schedule another data packet in the remaining data packets through another SR. Alternatively, the SR may request to schedule all remaining data packets in the data frame. This is not limited in this application, and may be implemented based on a specific situation.

It may be understood that, to implement the functions in the foregoing embodiments, the network device and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

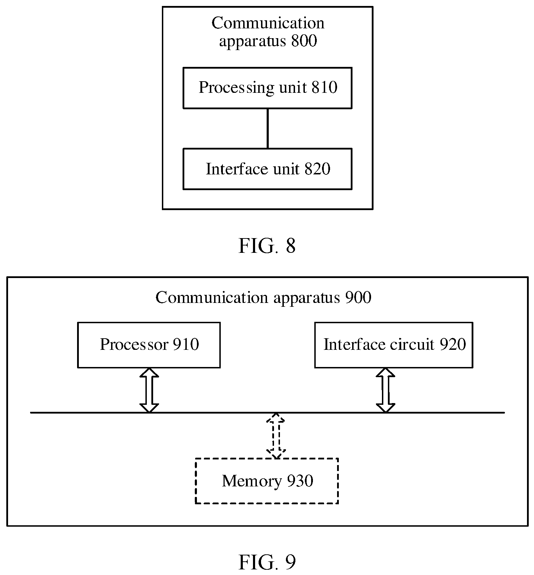

FIG. 8 and FIG. 9 are schematic diagrams of structures of possible communication apparatuses according to embodiments of this application. These communication apparatuses may be configured to implement functions of the terminal or the network device in the foregoing method embodiments, and therefore can also achieve beneficial effects of the foregoing method embodiments. In embodiments of this application, the communication apparatus may be one of the terminals 120a to 120j as shown in FIG. 1, or the network device 110a or 110b as shown in FIG. 1, or a module (for example, a chip or a chip system) applied to the terminal or the network device.

The communication apparatus 800 includes an interface unit 820, where the interface unit 820 may be configured to receive or send information. The communication apparatus 800 may further include a processing unit 810, where the processing unit 810 may be configured to process instructions or data, to implement a corresponding operation.

It should be understood that when the communication apparatus 800 is a chip configured in (or used in) a communication device, the interface unit 820 in the communication apparatus 800 may be an input/output interface or a circuit in the chip, and the processing unit 810 in the communication apparatus 800 may be a processor in the chip.

Optionally, the communication apparatus 800 may further include a storage unit 830. The storage unit 830 may be configured to store instructions or data. The processing unit 810 may execute the instructions or the data stored in the storage unit, to cause the communication apparatus to implement a corresponding operation.

The communication apparatus 800 may be configured to implement functions of the terminal or the network device in the method embodiment shown in FIG. 3, FIG. 6, or FIG. 7.

When the communication apparatus 800 is configured to implement the functions of the terminal in the method embodiment shown in FIG. 3, the interface unit 820 is configured to receive first information, where the first information indicates to delay delivering a first data packet to a first protocol layer, the first information is information at a second protocol layer, and the first protocol layer is an upper protocol layer of the second protocol layer. The processing unit 810 is configured to delay, based on the first information, delivering the first data packet to the first protocol layer for first duration.

When the communication apparatus 800 is configured to implement the functions of the network device in the method embodiment shown in FIG. 3, the processing unit 810 is configured to generate first information, where the first information indicates to delay delivering a first data packet to a first protocol layer, the first information is information at a second protocol layer, and the first protocol layer is an upper protocol layer of the second protocol layer. The interface unit 820 is configured to send the first information.

For more detailed descriptions of the processing unit 810 and the interface unit 820, refer to related descriptions in the method embodiment shown in FIG. 3.

When the communication apparatus 800 is configured to implement the functions of the network device in the method embodiment shown in FIG. 6, the interface unit 820 is configured to receive or send a data packet in a data frame. The processing unit 810 is configured to determine to delay sending downlink control information DCI for second duration when an amount of data received or sent in the data frame exceeds a data volume threshold, where the DCI is used to schedule remaining data packets in the data frame.

For more detailed descriptions of the processing unit 810 and the interface unit 820, refer to related descriptions in the method embodiment shown in FIG. 6.

When the communication apparatus 800 is configured to implement the functions of the terminal in the method embodiment shown in FIG. 7, the interface unit 820 is configured to receive second information, where the second information indicates to delay sending a scheduling request SR. The processing unit 810 is configured to determine, based on the second information, to delay sending the SR for third duration.

When the communication apparatus 800 is configured to implement the functions of the network device in the method embodiment shown in FIG. 7, the processing unit 810 is configured to generate second information, where the second information indicates to delay sending a scheduling request SR. The interface unit 820 is configured to send the second information.

For more detailed descriptions of the processing unit 810 and the interface unit 820, refer to related descriptions in the method embodiment shown in FIG. 7.

It should be understood that the interface unit 820 in the communication apparatus 800 may be implemented through a communication interface (for example, a transceiver, a transceiver circuit, an input/output interface, or a pin). When the communication interface is a transceiver, the transceiver may include a receiver and/or a transmitter. The processing unit 810 in the communication apparatus 800 may be implemented through at least one processor. Alternatively, the processing unit 810 in the communication apparatus 800 may be implemented through at least one logic circuit. Optionally, the communication apparatus 800 further includes a storage unit, and the storage unit may be implemented through a memory.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, hold input data required by the processor 910 to run instructions, or retain data generated after the processor 910 runs instructions.

In an implementation, the memory 930 may be integrated into or independent of the processor 910.

When the communication apparatus 900 is configured to implement the method shown in FIG. 3, FIG. 6, or FIG. 7, the processor 910 is configured to implement functions of the processing unit 810, and the interface circuit 920 is configured to implement functions of the interface unit 820.

When the communication apparatus is a chip used in a terminal device, the chip of the terminal device can implement the functions of the terminal in the foregoing method embodiments. The chip of the terminal device receives information from another module (for example, a radio frequency module or an antenna) in the terminal device, where the information is sent by a network device to the terminal device. Alternatively, the chip of the terminal device sends information to another module (for example, a radio frequency module or an antenna) in the terminal device, where the information is sent by the terminal device to a network device.

When the communication apparatus is a module used in a network device, the module of the network device can implement the functions of the network device in the foregoing method embodiments. The module of the network device receives information from another module (for example, a radio frequency module or an antenna) in the network device, where the information is sent by a terminal device to the network device. Alternatively, the module of the network device sends information to another module (for example, a radio frequency module or an antenna) in the network device, where the information is sent by the network device to a terminal device. The module of the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in an access network device or a terminal device. The processor and the storage medium may exist as discrete components in the access network device or the terminal device.

According to the methods provided in embodiments of this application, an embodiment of this application further provides a computer program product. The computer program product includes computer program code. When the computer program code is executed by one or more processors, an apparatus including the processor is caused to perform the method shown in FIG. 3, FIG. 6, or FIG. 7.

All or some of the foregoing embodiments may be implemented through software, hardware, firmware, or any combination thereof. When software is used to implement the foregoing embodiments, all or some of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus.

According to the methods provided in embodiments of this application, an embodiment of this application further provides a computer-readable storage medium, and the computer-readable storage medium stores a computer program or instructions. When the computer program or the instructions are run by one or more processors, an apparatus including the processor is caused to perform the method shown in FIG. 3, FIG. 6, or FIG. 7.

The computer program or the instructions may be stored in the computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

According to the methods provided in embodiments of this application, an embodiment of this application further provides a communication system, including the foregoing one or more terminals. The system may further include the foregoing one or more network devices.

In several embodiments provided in this application, it should be understood that the disclosed system, apparatus, and method may be implemented in other manners. For example, the described apparatus is merely an example. For example, the unit division is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving first information, wherein the first information indicates to delay delivering a first data packet to a first protocol layer, the first information is information at a second protocol layer, and the first protocol layer is an upper protocol layer of the second protocol layer; and
delaying, based on the first information, delivering the first data packet to the first protocol layer for first duration.

2. The method according to claim 1, wherein the first duration is predefined; or the first duration is configured through signaling; or the first duration is indicated in the first information.

3. The method according to claim 1 or 2, wherein the first information is carried in downlink control information DCI, and the first data packet is a transport block scheduled by the DCI.

4. The method according to claim 3, wherein the first protocol layer is a radio access control MAC layer and the second protocol layer is a physical layer.

5. The method according to claim 1 or 2, wherein the first information is carried in a radio access control control element MAC CE, the first information comprises an identifier of a logical channel, and the first data packet is carried on the logical channel.

6. The method according to claim 5, wherein the first protocol layer is a radio link control RLC layer, and the second protocol layer is a MAC layer.

7. The method according to claim 5 or 6, wherein the MAC CE is used to retransmit the first information, and the initially transmitted first information fails to be received; and
the delaying, based on the first information, delivering the first data packet to the first protocol layer for the first duration comprises:
delivering, based on the first information, a data packet carried on the logical channel to the first protocol layer at t+T, wherein t represents a moment at which a MAC CE used to initially transmit the first information is received, and T represents the first duration.

8. A data transmission method, comprising:
generating first information, wherein the first information indicates to delay delivering a first data packet to a first protocol layer, the first information is information at a second protocol layer, and the first protocol layer is an upper protocol layer of the second protocol layer; and
sending the first information.

9. The method according to claim 8, wherein duration for delaying delivering the first data packet to the first protocol layer is first duration, wherein the first duration is predefined; or the first duration is configured through signaling; or the first duration is indicated in the first information.

10. The method according to claim 8 or 9, wherein the first information is carried in downlink control information DCI, and the first data packet is a transport block scheduled by the DCI.

11. The method according to claim 10, wherein the first protocol layer is a radio access control MAC layer and the second protocol layer is a physical layer.

12. The method according to claim 8 or 9, wherein the first information is carried in a radio access control control element MAC CE, the first information comprises an identifier of a logical channel, and the first data packet is carried on the logical channel.

13. The method according to claim 12, wherein the first protocol layer is a radio link control RLC layer, and the second protocol layer is a MAC layer.

14. A data transmission method, comprising:
receiving or sending a data packet in a data frame; and
delaying sending downlink control information DCI for second duration when an amount of data received or sent in the data frame exceeds a data volume threshold, wherein the DCI is used to schedule remaining data packets in the data frame.

15. The method according to claim 14, wherein the second duration is predefined; or the second duration is configured through signaling.

16. A data transmission method, comprising:
receiving second information, wherein the second information indicates to delay sending a scheduling request SR; and
delaying, based on the second information, sending the SR for third duration.

17. The method according to claim 16, wherein the method further comprises:
sending a portion of data packets in a data frame, wherein
the SR requests to schedule remaining data packets in the data frame.

18. The method according to claim 16 or 17, wherein the third duration is predefined; or the third duration is configured through signaling; or the third duration is indicated in the second information.

19. The method according to any one of claims 16 to 18, wherein the second information is carried in downlink control information DCI or a radio access control control element MAC CE.

20. A data transmission method, comprising:
generating second information, wherein the second information indicates to delay sending a scheduling request SR; and
sending the second information.

21. The method according to claim 20, wherein the method further comprises:
receiving a portion of data packets in a data frame; and
the sending the second information comprises:
sending the second information when an amount of data received in the data frame exceeds a data volume threshold, wherein
the SR requests to schedule remaining data packets in the data frame.

22. The method according to claim 20 or 21, wherein the second information is carried in downlink control information DCI or a radio access control control element MAC CE.

23. A communication apparatus, comprising at least one processor, wherein the processor is coupled to a memory;
the memory is configured to store a program or instructions; and
the at least one processor is configured to execute the program or the instructions, to cause the apparatus to implement the method according to any one of claims 1 to 7, or cause the apparatus to implement the method according to any one of claims 16 to 19.

24. A communication apparatus, comprising at least one processor, wherein the processor is coupled to a memory;
the memory is configured to store a program or instructions; and
the at least one processor is configured to execute the program or the instructions, to cause the apparatus to implement the method according to any one of claims 8 to 15, or cause the apparatus to implement the method according to any one of claims 20 to 22.

25. A computer-readable storage medium, comprising a computer program, wherein when the computer program is run by one or more processors, an apparatus comprising the processor is caused to perform the method according to any one of claims 1 to 22.

26. A computer program product, wherein the computer program product comprises computer-executable instructions, and when the computer-executable instructions are run, the method according to any one of claims 1 to 22 is performed.

27. A communication apparatus, comprising a module configured to perform the method according to any one of claims 1 to 7.

28. A communication apparatus, comprising a module configured to perform the method according to any one of claims 8 to 13.

29. A communication apparatus, comprising a module configured to perform the method according to either of claims 14 and 15.

30. A communication apparatus, comprising a module configured to perform the method according to any one of claims 16 to 19.

31. A communication apparatus, comprising a module configured to perform the method according to any one of claims 20 to 22.
